# EUROPEAN PATENT APPLICATION

(11) **EP 1 662 408 A1**
(43) Date of publication of application: **31.05.2006**
(21) Application number: 05110417.2
(22) Date of filing: 07.11.2005
(51) Int. Cl.: G06F 17/30, G06F 12/00

(54) **Method and system for caching remote files locally**

(30) Priority: 30.11.2004 US 999380
(71) Applicant: Microsoft Corporation, Redmond WA 98052 (US)
(72) Inventor: Eller, Alexis J.,, Redmond, WA 98052 (US); Christiansen, Neal R.,, Redmond, WA 98052 (US); Thind, Ravinder S, Redmond, WA 98052 (US)
(74) Representative: Grünecker, Kinkeldey, Stockmair & Schwanhäusser Anwaltssozietät

(57) **Abstract**

A method and system for caching remote objects locally. A request to access an object is received. A determination is made as to whether the object is cached. If the object is cached and the request is not to create a new object, modify an existing object, or open a directory, the request is directed to a local file system. Otherwise, the request is directed to a remote file system. Information about which objects are requested may be used to copy objects stored remotely to a local server as specified by a caching policy.

## Description

### FIELD OF THE INVENTION

The invention relates generally to computers, and more particularly to file systems.

### BACKGROUND

A set of content servers in a datacenter, e.g., a server farm, may serve content to many clients at various locations. Previously, the total set of content hosted by a given server farm was relatively small and could be transmitted to and stored on each of the content servers in the farm without excessive costs. Now, however, the amount of content available from a server farm is often in excess of several hundred gigabytes. Buying large capacity hard drives for servers, provisioning them with all the content of a datacenter, and keeping the content on them up-to-date so that they can serve any content requested is expensive both in storage and transmission costs. This is particularly true when more than one datacenter is used to serve the content.

What is needed is a method and system of effectively caching remote data locally such that the entirety of the content set can be stored in separate dedicated storage while a subset of the content is cached on the content server hard disk. Ideally, such a method and system would be mostly or completely transparent to any applications requesting the data.

### SUMMARY

Briefly, the present invention provides a method and system for caching remote objects locally. A request to access an object is received. A determination is made as to whether the object is cached. If the object is cached and the request is not to create a new object, modify an existing object, or open a directory, the request is directed to a local file system. Otherwise, the request is directed to a remote file system.

In one aspect of the invention, a filter monitors requests and reports to a caching service names of objects accessed on the local and remote file systems. The caching service may apply a policy to this information to determine which remote objects to cache locally and which locally cached objects to purge.

In another aspect of the invention, the filter monitors requests to local and remote file systems and the filter itself may apply a policy to determine which remote objects to cache locally and which locally cached objects to purge.

In another aspect of the invention, the filter receives a notification that an object has changed remotely and deletes a local cached copy of the object.

Other aspects will become apparent from the following detailed description when taken in conjunction with the drawings, in which:

### BRIEF DESCRIPTION OF THE DRAWINGS

FIGURE 1 is a block diagram representing a computer system into which the present invention may be incorporated;
FIG. 2 is a block diagram representing an exemplary arrangement of components of a system in which the present invention may operate in accordance with various aspects of the invention;
FIG. 3 is a block diagram representing another exemplary arrangement of components of a system in which the present invention may operate in accordance with various aspects of the invention;
FIG. 4 is a block diagram representing another exemplary arrangement of components of a system in which the present invention may operate in accordance with various aspects of the invention;
FIG. 5 is a block diagram representing an exemplary environment in which the present invention may be practiced in accordance with various aspects of the invention;
FIG. 6 is a block diagram representing an exemplary arrangement of components of a system in which the present invention may be practiced in accordance with various aspects of the invention;
FIG. 7 is a block diagram representing an exemplary arrangement of components of a system in which the present invention may be practiced in accordance with various aspects of the invention;
FIG. 8 is a flow diagram that generally represents actions that may occur when determining whether to redirect an I/O operation to a local cache in accordance with various aspects of the invention;
FIG. 9 is a flow diagram that generally represents actions which correspond to block 835 of FIG. 8 that may occur when determining whether to redirect an I/O operation to a local cache in accordance with various aspects of the invention;
FIG. 10 is a flow diagram that generally represents actions that may occur when a remote object changes in accordance with various aspects of the invention; and
FIG. 11 is a block diagram representing another exemplary arrangement of components of a system in which the present invention may be practiced in accordance with various aspects of the invention

### DETAILED DESCRIPTION

### EXEMPLARY OPERATING ENVIRONMENT

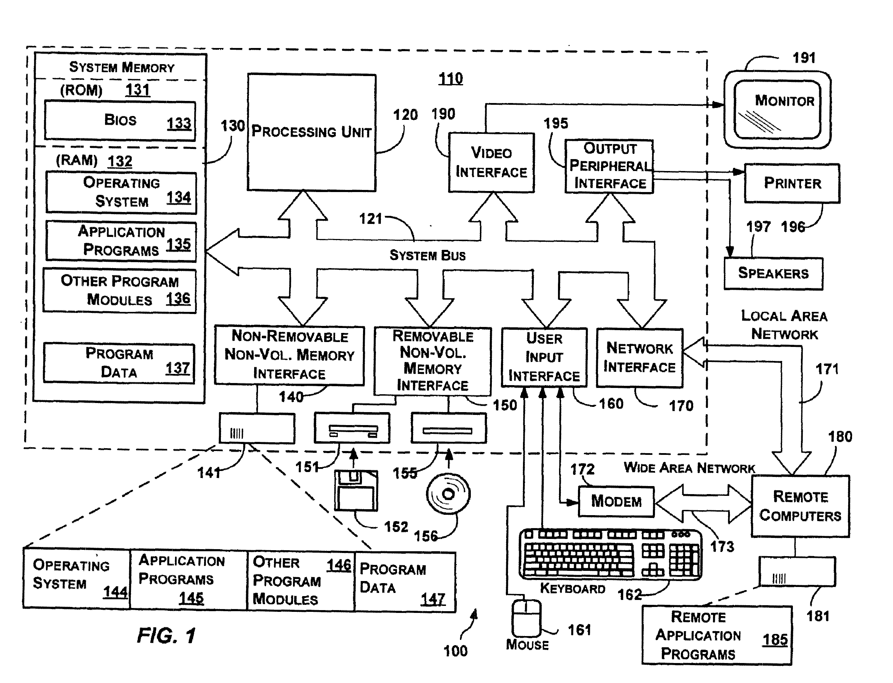

Figure 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microcontroller-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, and so forth, which perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to Figure 1, an exemplary system for implementing the invention includes a general-purpose computing device in the form of a computer 110. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer-readable media. Computer-readable media can be any available media that can be accessed by the computer 110 and includes both volatile and nonvolatile media, and removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 110. Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/nonvolatile computer storage media. By way of example only, Figure 1 illustrates a hard disk drive 140 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer-readable instructions, data structures, program modules, and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, a touch-sensitive screen of a handheld PC or other writing tablet, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160 or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### Exemplary Filters and Arrangements Thereof

With contemporary operating systems, such as Microsoft Corporation's Windows® XP operating system with an underlying file system such as the Windows® NTFS (Windows® NT File System), FAT, CDFS, SMB redirector filesystem, or WebDav file systems, one or more file system filter drivers may be inserted between the I/O manager that receives user I/O requests and the file system driver. In general, filter drivers (sometimes referred to herein simply as "filters") are processes or components that enhance the underlying file system by performing various file-related computing tasks that users desire, including tasks such as passing file system I/O (requests and data) through anti-virus software, file system quota providers, file replicators, and encryption/compression products.

For example, antivirus products provide a filter that watches I/O to and from certain file types (.exe, .doc, and the like) looking for virus signatures, while file replication products perform file system-level mirroring. Other types of file system filter drivers are directed to system restoration (which backs up system files when changes are about to be made so that the user can return to the original state), disk quota enforcement, backup of open files, undeletion of deleted files, encryption of files, and so forth. Thus, by installing file system filter drivers, computer users can select the file system features they want and need, in a manner that enables upgrades, replacement, insertion, and removal of the components without changing the actual operating system or file system driver code.

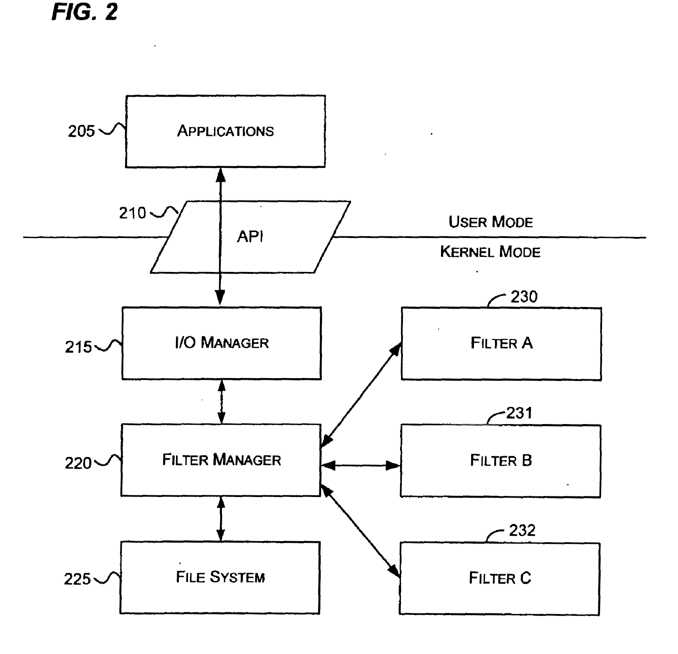

FIG. 2 is a block diagram representing an exemplary arrangement of components of a system in which the present invention may operate in accordance with various aspects of the invention. The components include one or more applications 205, an applications programming interface (API) 210, an input/output (I/O) manager 215, a filter manger 220, a file system 225, and one or more filters 230-232.

The applications 205 may make file system requests (e.g., via function/method calls) through the API 210 to the I/O manager 215. The I/O manager 215 may determine what I/O request or requests should be issued to fulfill each request and send each I/O request to the filter manager 220. The I/O manager 210 may also return data to the applications 205 as operations associated with the file system requests proceed, complete, or abort.

In one implementation, filters comprise objects or the like that when instantiated register (e.g., during their initialization procedure) with a registration mechanism in the filter manager 220. For efficiency, each filter typically will only register for file system requests in which it may be interested in processing. To this end, as part of registration, each filter notifies the filter manager 220 of the types of I/O requests in which it is interested (e.g., create, read, write, close, rename, and so forth). For example, an encryption filter may register for read and write I/Os, but not for others wherein data does not need to be encrypted or decrypted. Similarly, a quota filter may be interested only in object creates and object writes.

In addition to specifying the types of I/O requests in which it is interested, a filter may further specify whether the filter should be notified for pre-callbacks and post callbacks for each of the types of I/O. A pre-callback is called as data associated with an I/O request propagates from the I/O manager 215 towards the file system 225, while a post-callback is called during the completion of the I/O request as data associated with the I/O request propagates from the file system 225 towards the I/O manager 215.

From each I/O request, the filter manager 220 may create a data structure in a uniform format suitable for use by the filters 230-232. Hereinafter, this data structure is sometimes referred to as callback data. The filter manager 220 may then call and pass the callback data to each filter that has registered to receive callbacks for the type of I/O received by the filter manager 220. Any filters registered to receive callbacks for the type of I/Os received by the filter manager 220 are sometimes referred to as registered filters.

Typically, the filter manager 220 passes callback data associated with a particular type of I/O request to each registered filter sequentially in an order in which the registered filters are ordered. For example, if the filters 230 and 232 are registered to receive callbacks for all read I/O requests and are ordered such that the filter 230 is before the filter 232 in processing such requests, then after receiving a read I/O, the filter manager 220 may first call and pass the callback data to the filter 230 and after the filter 230 has processed the callback data, the filter manager 220 may then call and pass the callback data (as modified, if at all) to the filter 232.

A filter may be attached to one or more volumes. That is, a filter may be registered to be called and receive callback data for I/Os related to only one or more than one volumes.

A filter may generate its own I/O request which may then be passed to other filters. For example, an anti-virus filter may wish to read a file before it is opened. A filter may stop an I/O request from propagating further and may instruct the filter manager to report a status code (e.g., success or failure) for the I/O request. A filter may store data in memory and persist (e.g., store) this data on disk. In general, a filter may be created to perform any set of actions that may be performed by a kernel-mode or user-mode process and may be reactive (e.g., wait until it receives I/O requests before acting) and/or proactive (e.g., initiate its own I/O requests or perform other actions asynchronously with I/O requests handled by the I/O manager 215).

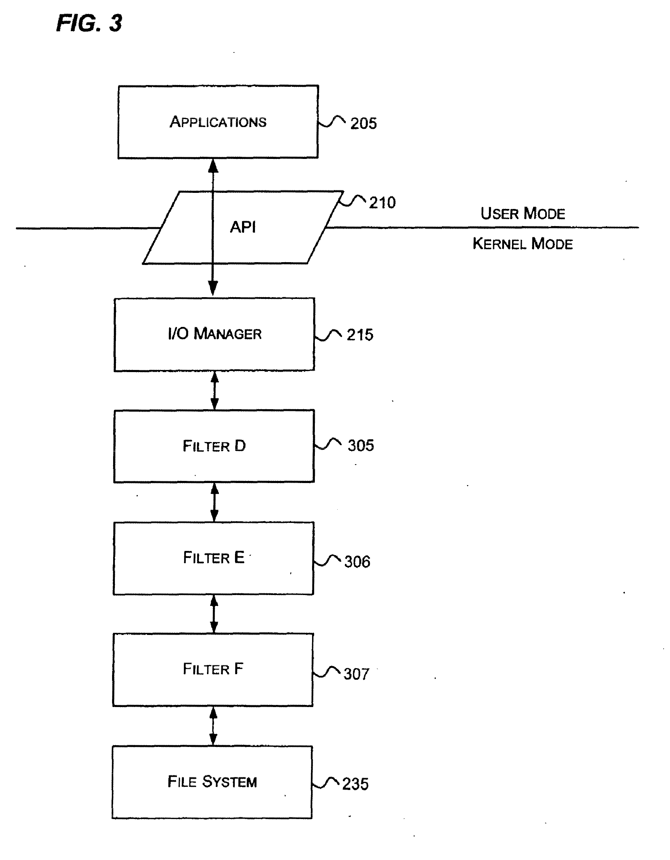

In one embodiment, filters may be arranged in a stacked manner as illustrated in FIG. 3, which is a block diagram representing another exemplary arrangement of components of a system in which the present invention may operate in accordance with various aspects of the invention. In this embodiment, each of the filters 305-307 may process I/O requests and pass the requests (modified or unmodified) to another filter or other component in the stack. For example, in response to a read request received from one of the applications 205, the I/O manager 215 may issue an I/O request and send this request to the filter 305. The filter 305 may examine the I/O request and determine that the filter 305 is not interested in the I/O request and then pass the I/O request unchanged to the filter 306. The filter 306 may determine that the filter 306 will perform some action based on the I/O request and may then pass the I/O request (changed or unchanged) to the filter 307. The filter 307 may determine that the filter 307 is not interested in the I/O request and pass the I/O request to the file system 235.

After the file system 235 services the I/O request, it passes the results to the filter 307. Typically, the results pass in an order reverse from that in which the I/O request proceeded (e.g., first to filter 307, then to filter 306, and then to filter 305). Each of the filters 305-307 may examine the results, determine whether the filter is interested in the results, and may perform actions based thereon before passing the results (changed or unchanged) on to another filter or component.

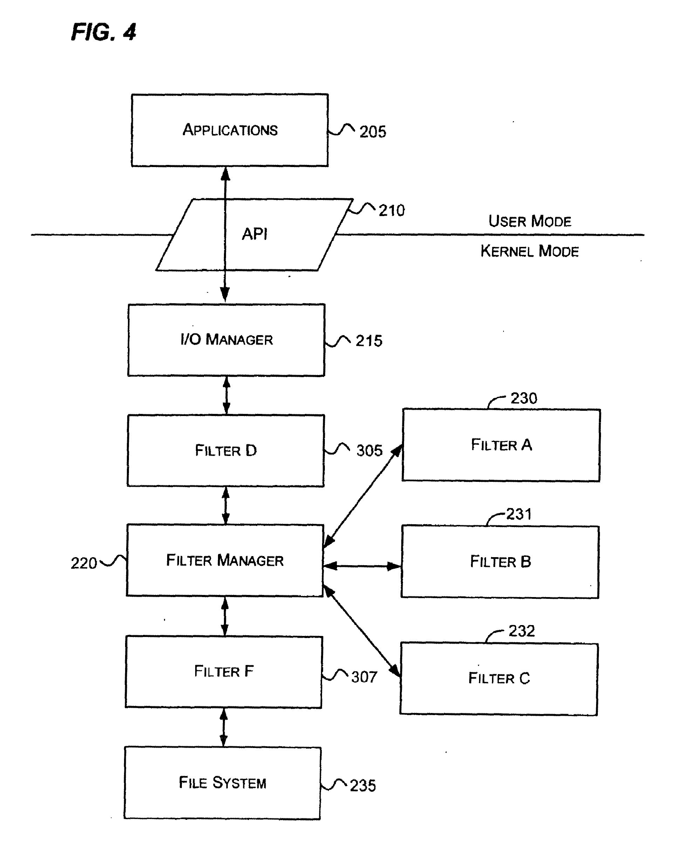

In another embodiment of the invention, filters may be arranged in a stacked/managed manner as illustrated in FIG. 4, which is a block diagram representing another exemplary arrangement of components of a system in which the present invention may operate in accordance with various aspects of the invention. In this configuration, some of filters are associated with a filter manager while other filters are not. The filter manager 220 is placed in a stack with other filters (e.g., filters 305 and 307).

It will be readily recognized that filters may be implemented in many other configurations without departing from the spirit or scope of the invention. In some embodiments, a filter comprises any object that examines I/O between an application and a file system and that is capable of changing, completing, or aborting the I/O or performing other actions based thereon. Such filters may execute in user mode or in kernel mode and may be part of other components.

Returning to FIG. 2, the file system 235 may include one or more volumes that may be located locally or remotely to the machine or machines upon which the applications 205 execute.

### Caching Remote Content Locally

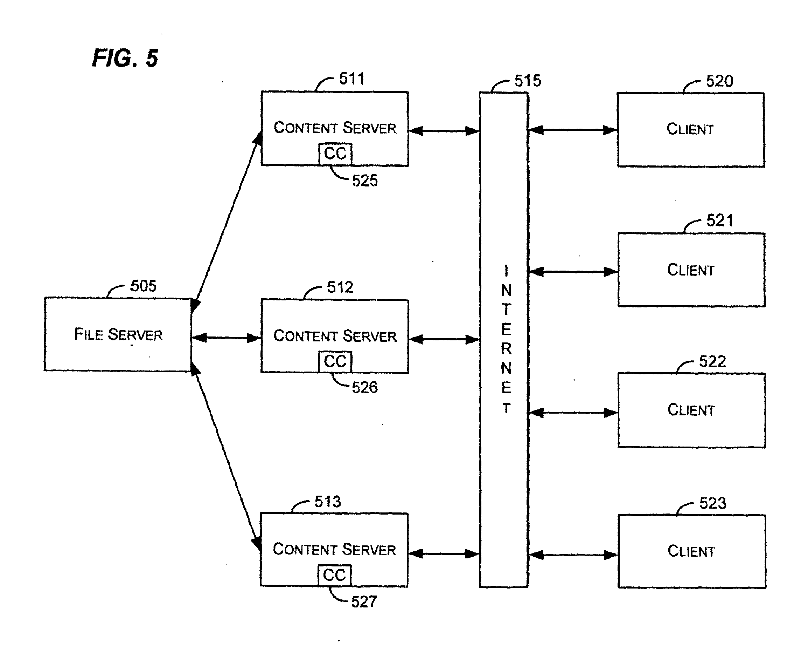

FIG. 5 is a block diagram representing an exemplary environment in which the present invention may be practiced in accordance with various aspects of the invention. The environment includes a file server 505, content servers 511-513, and clients 520-523 and may include other components (not shown). The various entities may communicate with each other via various networks including intra-networks and the Internet 515.

The file server 505 may include a set of all objects (e.g., directories, files, other content, and the like) that may be available to clients from a datacenter. The content servers 511-513 may access these objects when providing content to a client. A content server may, for example, host a Web server application that serves content to clients through networks including the Internet 515. After accessing an object from the file server 505, a content server may then provide the object to a client. A content server may or may not cache objects obtained from the file server 505. For example, extremely large objects that are not frequently accessed may not be cached while relatively smaller objects that are accessed frequently may be cached. A content server may cache an object in main memory (e.g., RAM) and/or in nonvolatile memory such as disk. Determining which objects to cache on a content server may be performed by a caching component (i.e., one of caching components 525-527) included on the content server.

In one implementation, content servers do not modify any cached objects that they have cached from the file server 505. Instead, when an application requests that a remote object be modified or that a new object be created, the content server sends the request to the file server 505. This helps keep the most up-to-date copy of the content on the file server 505.

Each of the caching components 525-527 may include various subcomponents including a filter and caching service as described in more detail below.

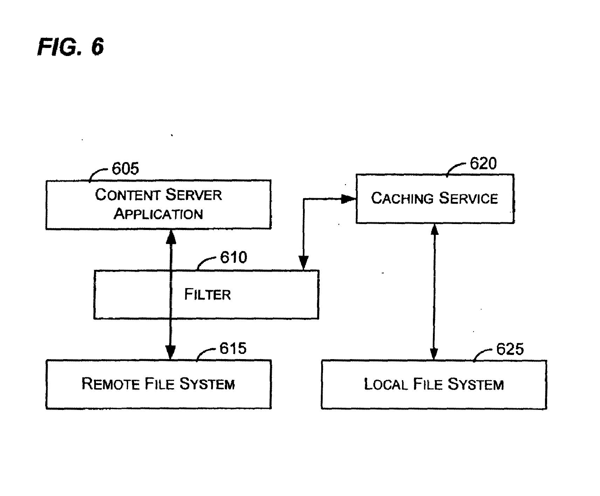

FIG. 6 is a block diagram representing an exemplary arrangement of components of a system in which the present invention may be practiced in accordance with various aspects of the invention. The system includes a content server application 605, a filter 610, a remote file system 615, a caching service 620, and a local file system 625 and may also include other components (not shown).

The content server application 605 may comprise various components (not shown) that may independently access objects from the remote and local file systems 615 and 625. In some embodiments, no single component of the content server application 605 is aware of which objects all the components have requested or where these objects reside (e.g., locally or remotely). To monitor which remote objects are being requested, the filter 610 may monitor I/Os to and from the remote file system 615. Periodically, the filter 610 may send a list to the caching service 620 that includes the names of objects accessed from the remote file system 615.

The caching service 620 may then use the list sent by the filter 610 to determine which objects from the remote file system to cache on the local file system 625. This determination may be made based on a policy set by an administrator or the like which may include frequency of access to the object, size of the object, or any other caching rules.

In one embodiment, the caching service 620 executes in user mode. In another embodiment, the caching service 620 executes in kernel mode. In yet another embodiment, the functionality of the caching service 620 is performed by the filter 610. In this embodiment, a caching service 620 separate from the filter 610 is unnecessary.

A system administrator or the like may set a registry key or other configuration data to inform the caching service 620 where to cache objects. For example, a system administrator may indicate that objects to be cached from network share \\SERVER\SHARE be placed in the directory C:\CACHE. When an object in a subdirectory of \\SERVER\SHARE is cached, any ancestor directories of the object may also be created in C:\CACHE to keep a similar directory structure. For example, if the caching service 620 determines that \\SERVER\SHARE\DOCUMENTS\COMPANY.HTML should be cached, a directory called DOCUMENTS may be created in C:\CACHE and the object COMPANY.HTML may be placed in that directory.

In addition to monitoring which remote objects are accessed, the filter 610 may also be used to redirect requests to remote objects to locally cached objects as described in more detail below.

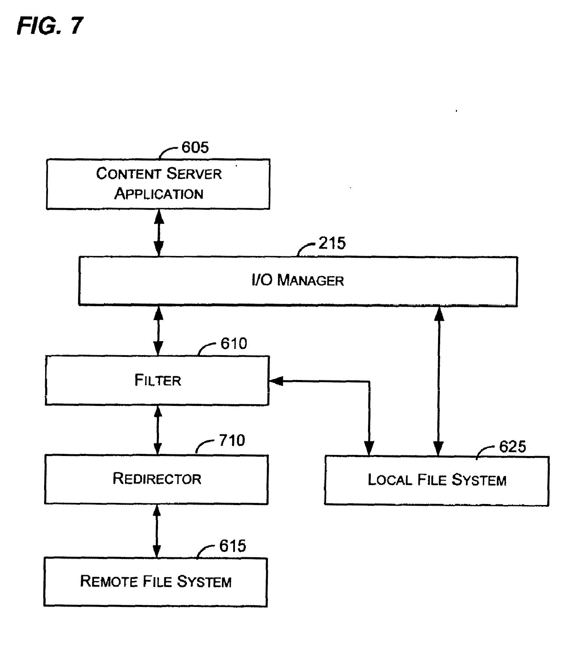

FIG. 7 is a block diagram representing an exemplary arrangement of components of a system in which the present invention may be practiced in accordance with various aspects of the invention. The system includes a content server application 605, an I/O manager 215, a filter 610, a redirector 710, a remote file system 615, and a local file system 625 and may also include other components (not shown).

When any component of the content server application 605 requests access to an object that is on the remote file system 615, the component provides a name of the object (e.g., a UNC name) to the I/O manager 215. The I/O manager 215 interacts with one or more redirectors (e.g., redirector 710) to determine if any of the redirectors knows where the object corresponding to the name resides. Alternatively, the I/O manager 215 may interact with a single component that then interacts with each available redirector to determine if a redirector knows where the object corresponding to the name resides. When a redirector responds, the redirector is used to establish a session with the remote server upon which the object resides. To the content server application 605, the procedure for accessing remote objects may be identical to the procedure for accessing local objects. In some implementations, the content server application 605 may not know whether an object is located remotely or locally.

When the caching service 620 of FIG. 6 begins executing, the caching service 620 may provide a mapping of remote file system names (e.g., network shares) to local cache directory names. For example, this mapping may indicate that \\SERVER\SHARE maps to C:\CACHE and that other remote file system names map to other local cache directories. The filter 610 stores this information to determine when to redirect requests for objects located remotely to local cache directories. The filter may store the information in a mapping table for example.

When the filter 610 receives a request to open a remote object, the filter 610 may determine whether the request should be mapped to the local file system 625. To do this the filter 610 may determine whether the object is cached on the local file system 625. For example, if the filter 610 receives a request to open an object named \\SHARE\A.TXT, the filter 610 may look in the mapping table to see if there is a mapping for a prefix of this object. In this case, the filter 610 may determine that \\SERVER\SHARE maps to C:\CACHE. The filter 610 may then determine whether the object A.TXT exists in C:\CACHE. If so, the filter 610 may instruct the I/O manager 215 to redirect the request to the local file system 625 as described in more detail below.

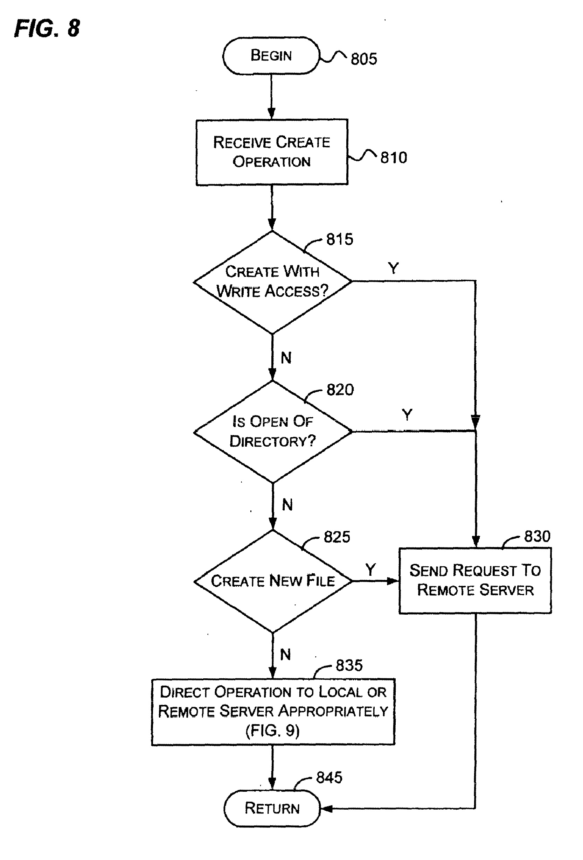

FIG. 8 is a flow diagram that generally represents actions that may occur when determining whether to redirect an I/O operation to a local cache in accordance with various aspects of the invention. At block 805, the process begins.

At block 810, a create operation is received by the filter. A create operation may create an object or open an already-existing object. Other operations may be ignored by the filter and passed on to the redirector.

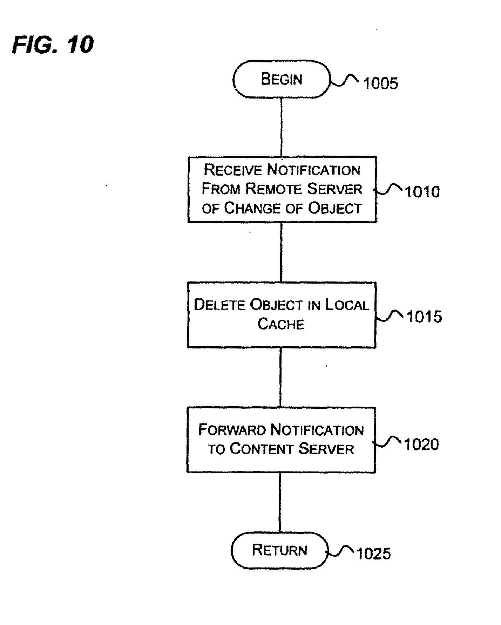

In some implementations, an application may request that it be notified when objects in a directory have changed. In such implementations, when the remote server sends a notification that a change has occurred, the filter may take other actions as described in more detail in conjunction with FIG. 10.

At block 815, a determination is made as to whether the create operation is attempting to open a remote object for write access. If so, processing branches to block 830; otherwise, processing branches to block 820. If the create operation is attempting to modify a remote object (the yes branch), the filter passes the operation to the redirector so that the remote content is updated. This allows the original content, not the content that is cached locally, to be updated.

At block 820, a determination is made as to whether the operation is an open of a directory. If so, processing branches to block 830; otherwise, processing branches to block 825. When a content server application is requesting directory information, it typically needs to be able to view the name of all objects in a directory, not just those objects that are cached locally. By allowing opens of directories to proceed to the remote server as normal, the filter allows the requestor to obtain a directory listing that includes all objects in the remote directory. While or after opening a directory, a content server application may operate upon the directory in other ways (e.g., by deleting the directory or registering for change notifications). These other operations are also sent to the remote server but may be sent without interaction by the filter as in some embodiments the filter redirects creates only.

At block 825, a determination is made as to whether the create operation is requesting that a new object be created. If so, processing branches to block 830; otherwise, processing branches to block 835. If the create operation is attempting to create a remote object (the yes branch), the filter passes the operation to the redirector so that the remote content is updated. This causes the object to be created on the remote file system rather than creating the object in a local cache. It will be recognized that the determinations associated with blocks 815-825 may be performed in any order without departing from the spirit or scope of the present invention. In one embodiment, the determination associated with 825 is performed first, followed by the determination associated with block 815, and then the determination associated with block 820.

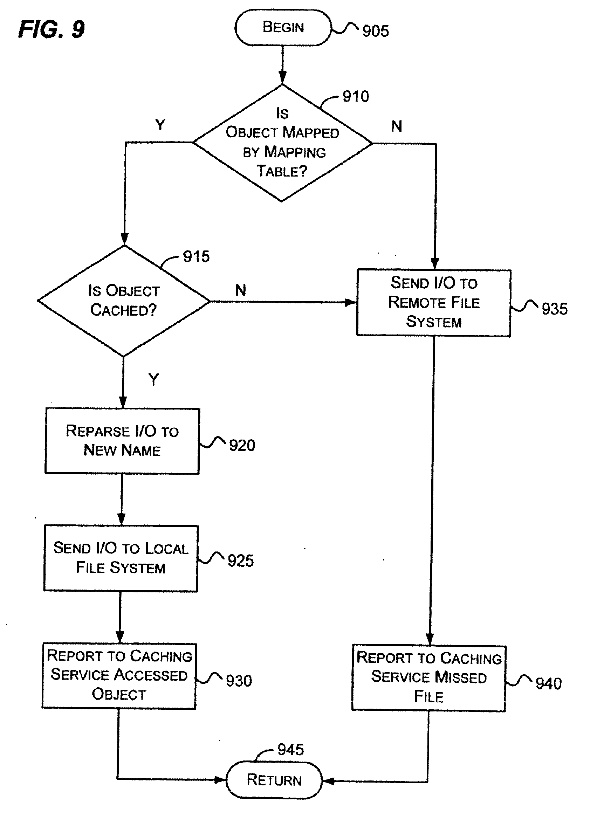

At block 835, the operation is mapped locally or to a remote server as described in more detail in conjunction with FIG. 9.

FIG. 9 is a flow diagram that generally represents actions which correspond to block 835 of FIG. 8 that may occur when determining whether to redirect an I/O operation to a local cache in accordance with various aspects of the invention. At block 905, the process begins.

At block 910, a determination is made as to whether the object is mapped by the mapping table maintained by the filter. If so, processing branches to block 915; otherwise, processing branches to block 935. An object is mapped by the mapping table if the object is a descendant of any directory of a network share included in the mapping table.

At block 915, a determination is made as to whether the object is cached. If so, processing branches to block 920; otherwise, processing branches to block 920. In one implementation, a filter may determine that an object is cached by obtaining the cache directory from the mapping table and attempting to open the object. In another implementation, what objects are cached is maintained in memory and a determination of whether an object is cached may be made without attempting to open the object. It will be recognized that there are many other ways to determine that an object is cached that may be used without departing from the spirit or scope of the present invention

At block 920, the I/O is reparsed to the new name. In essence, the I/O is redirected to the cached object of the local file system. In some implementations, this may be accomplished by returning a STATUS_REPARSE to the I/O manager and providing the I/O manager with the name of the locally cached object.

At block 925, the I/O is sent to the local file system. The I/O manager may store information identifying what object the I/O was directed to so that afterwards any other operations related to the I/O may be sent directly to the local file system without needing to be reparsed or handled by the filter.

In implementations in which there is not a reparse mechanism, the filter may monitor for subsequent I/Os related to a recently mapped I/O and may direct these I/Os to the local file system.

At block 930, the caching service is notified of the accessed object. As indicated previously, lists of accessed objects may be sent to the caching service periodically instead of sending a notification each time an object is accessed. Sending notification of accesses to local cached objects to the caching service may be done, for example, so that the caching service may determine when to remove cached objects from the local file system.

At block 935, the I/O is sent to the remote file system. This may be done through a redirector component as described previously.

At block 940, the caching service is notified that an object was accessed remotely. Again, as indicated previously, lists of accessed objects may be sent to the caching service periodically instead of sending a notification each time an object is accessed. Sending notification of accesses to remote objects to the caching service may be done, for example, so that the caching service may determine when to obtain remote objects and cache them on the local file system.

At block 945, the process returns.

FIG. 10 is a flow diagram that generally represents actions that may occur when a remote object changes in accordance with various aspects of the invention. At block 1005, the process begins.

At block 1010, notification that an object contained on a remote server has changed is received by the filter. At block 1015, the object is deleted locally, if it exists. This helps to ensure that stale content is purged from the local cache. Furthermore, when the remote object is requested again, it will not be found in cache, so the filter will allow the request to be sent to the remote file system.

At block 1020, the notification is forwarded to the content server which may then attempt to obtain the most recent copy of the object from the remote server to cache it.

At block 1025, the process returns.

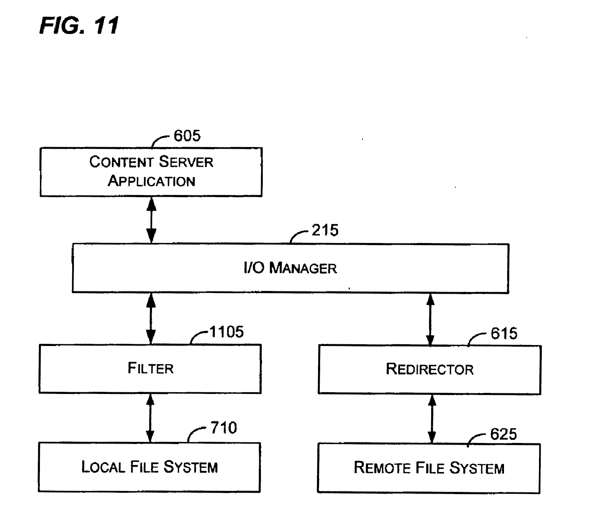

FIG. 11 is a block diagram representing another exemplary arrangement of components of a system in which the present invention may be practiced in accordance with various aspects of the invention. The system includes a content server application 605, an I/O manager 215, a filter 1105, a redirector 710, a remote file system 615, and a local file system 625 and may also include other components (not shown).

In some operating systems, the operating system may provide reparse points for directories of a file system. A reparse point is a collection of data associated with a directory of a file system. The data of a reparse point may indicate a directory in which cached objects associated with the directory exist and a remote directory from which the objects may be obtained. When an operation is received to access a directory associated with a reparse point or any of its descendants, a STATUS_REPARSE is returned to the I/O manager 215 together with the data associated with the reparse point. Reparse points may be persisted by the file system so that they exist even after a dismount and remount of the file system.

When the local file system 710 responds with a STATUS_REPARSE, the filter 1105 may use the data associated with the reparse point to determine whether the object is cached locally. If the object is cached locally, the filter instructs the I/O manager 215 to redirect the I/O operation to the locally cached object. If the object is not cached locally, the filter may instruct the I/O manager 215 to obtain the object remotely via the redirector 615.

The conditions for automatically passing certain I/O operation (e.g., that modify an object, open a directory, and create an object) to the remote file system as described in conjunction with FIG. 8 still apply with the filter 1105 of FIG. 11. In addition, the reporting actions associated with blocks 930 and 940 of FIG. 9 may also be performed by the filter 1105 of FIG. 11.

In connection with using reparse points, one or more shadow directories may be created on the local file system. Reparse points may be associated with each directory to indicate a local cache directory and a remote directory on which objects may be found. In addition, the content server application 605 may be instructed to obtain objects via the one or more shadow directories using network names (instead of volume names). This may be done to avoid misbehavior that may result if the content server application 605 determines that the objects are located locally. Security delegation may also be enabled to allow credentials to be passed to remote machines.

As can be seen from the foregoing detailed description, there is provided a method and system for caching remote data locally. While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the spirit and scope of the invention.

## Claims

1. A computer-readable medium having computer-executable instructions, comprising:
receiving a request to access an object that is stored on a remote server;
examining the request by a filter to determine whether to forward the request to the remote server or to redirect the request to a local file system, wherein the filter has an opportunity to monitor requests to the remote server; and
if the object is cached, redirecting the request to the local file system.

2. The computer-readable medium of claim 1, further comprising if the request to access the object comprises a request to create the object, forwarding the request to the remote server.

3. The computer-readable medium of claim 1, further comprising if the request to access the object comprises a request to modify the object, forwarding the request to the remote server.

4. The computer-readable medium of claim 1, further comprising if the object comprises a directory, forwarding the request to the remote server.

5. The computer-readable medium of claim 1, further comprising notifying a caching service that the object was requested and was not contained on the local file system.

6. The computer-readable medium of claim 5, further comprising obtaining the object from the remote server and storing it on the local file system.

7. The computer-readable medium of claim 1, further comprising notifying a caching service that the object was requested and was contained on the local file system.

8. The computer-readable medium of claim 7, further comprising keeping the object in the local file system based on a frequency with which the object is requested.

9. The computer-readable medium of claim 1, wherein the filter executes in kernel-mode.

10. The computer-readable medium of claim 1, further comprising opening and closing the object and directing input/output operations that affect the object between opening and closing the object without examination of the input/output operations by the filter.

11. The computer-readable medium of claim 1, further comprising receiving a notification that the object has changed and deleting a cached copy of the object on the local file system.

12. The computer-readable medium of claim 11, wherein the filter receives the notification and deletes the cached copy of the object.

13. In a computing environment, a method, comprising:
receiving a request to access an object that is associated with a reparse point, wherein the reparse point includes names of a local directory and a remote directory;
determining whether the object is cached in the local directory;
if the object is cached in the local directory, providing access to the object via the local directory.

14. The method of claim 13, wherein the local directory is stored in a local file system and wherein the remote directory is stored on a remote file system.

15. The method of claim 14, wherein the reparse point is persisted on the local file system.

16. The method of claim 14, wherein the local file system returns the reparse point when an attempt to access the object is received by the local file system.

17. The method of claim 16, wherein determining whether the object is cached in the local directory comprises examining, by a filter, the reparse point that the local file system returns.

18. The method of claim 17, wherein determining whether the object is cached in the local directory further comprises the filter obtaining the local directory from the reparse point and attempting to open the object in the local directory.

19. The method of claim 18, further comprising redirecting the request to the local directory if attempting to open the object in the local directory succeeds.

20. The method of claim 18, further comprising redirecting the request to the remote file system if attempting to open the object in the local directory fails.

21. The method of claim 17, wherein the filter has an opportunity of examining any request from user-mode processes to access an object on the local file system.

22. The method of claim 13, further comprising if the object is not cached in the local directory, obtaining the object from the remote directory and caching it in the local directory.

23. The method of claim 13, further comprising if the request to access an object is a request to create the object, redirecting the request to the remote directory.

24. The method of claim 13, further comprising if the request to access an object is a request to change the object, redirecting the request to the remote directory.

25. The method of claim 13, further comprising if the object is a directory, redirecting the request to the remote directory.

26. The method of claim 13, wherein the object has a name that identifies the object to a file system, wherein the reparse point is associated with a directory that has a name that identifies the directory to the file system, and wherein the object is associated with a reparse point if a prefix of the name of the object includes the name of the directory.

27. An apparatus for caching, comprising:
a local file system arranged to store objects;
a component arranged to determine which objects to store on the local file system; and
a filter arranged to monitor input and output and to report to the component names of objects for which access is sought.

28. The apparatus of claim 27, wherein the objects comprise directories and files.

29. The apparatus of claim 27, wherein the filter has an opportunity to examine any communication to or from the local file system.

30. The apparatus of claim 27, wherein the filter has an opportunity to examine any communication to or from a remote file system.

31. The apparatus of claim 30, wherein the filter is arranged to register to be notified of any communication to or from the remote file system that involves a create operation.

32. The apparatus of claim 31, wherein the create operation comprises an operation to open an already-existing object.

33. The apparatus of claim 31, wherein the create operation comprises an operation to create a new object.

34. The apparatus of claim 27, wherein the filter is arranged to perform actions, comprising:
receiving a request to access an object that is stored on a remote server; and
determining whether to forward the request to the remote server or to redirect the request to the local file system.

35. The apparatus of claim 34, wherein the filter is further arranged to forward the request to the remote server if the request comprises a request to create a new object, change an existing object, or open a directory.

36. The apparatus of claim 34, wherein the filter is further arranged to forward the request to the local file system if the object is cached on the local file system.

37. The apparatus of claim 27, wherein the component applies a policy to the objects reported by the filter to determine which objects to store on the local file system.
